(19) Europäisches Patentamt
European Patent Office
Office européen des brevets

(11) EP 3 725 848 A1

(12) EUROPEAN PATENT APPLICATION
published in accordance with Art. 153(4) EPC

(43) Date of publication:
21.10.2020 Bulletin 2020/43

(51) Int Cl.:
C08L 77/00 (2006.01)    B29B 11/10 (2006.01)
B29C 49/00 (2006.01)    B29C 49/04 (2006.01)
C08K 5/524 (2006.01)    C08L 23/08 (2006.01)
C08L 23/14 (2006.01)    F17C 1/16 (2006.01)

(21) Application number: 18889084.2

(22) Date of filing: 10.12.2018

(86) International application number:
PCT/JP2018/045270

(87) International publication number:
WO 2019/117072 (20.06.2019 Gazette 2019/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.12.2017 JP 2017236848

(71) Applicant: Ube Industries, Ltd.
Yamaguchi 755-8633 (JP)

(72) Inventors:
• YAMASHITA Atsushi
Ube-shi, Yamaguchi 755-8633 (JP)
• YASUI Tetsuya
Ube-shi, Yamaguchi 755-8633 (JP)

(74) Representative: Hoffmann Eitle
Patent- und Rechtsanwälte PartmbB
Arabellastraße 30
81925 München (DE)

(54) POLYAMIDE RESIN COMPOSITION

(57)    This is to provide a polyamide resin composition which is excellent in impact resistance at a low temperature as well as excellent in blow moldability while maintaining a good surface appearance of a molded product.

Provided is a polyamide resin composition which comprises 40 to 85 parts by mass of a polyamide (A) and 10 to 20 parts by mass of an impact-resistant material (B) in 100 parts by mass of the polyamide resin composition, wherein an absolute value $|\Delta\log(\sigma(t))/\Delta t|$ [Pa/s] of a stress change rate obtained from a stress $\sigma(t)$ [Pa] obtained by the following stress relaxation measurement method satisfies Formula (1) at a time of an elapsed time t=0.1 [s], and

in a stress relaxation curve in which data of the stress $\sigma(t)$ [Pa] and the elapsed time t [s] obtained by the following stress relaxation measurement method are plotted as the elapsed time t logarithmically represented on an x axis and the stress $\sigma(t)$ logarithmically represented on a y axis, an initial stress $\sigma_0$ [Pa] which is a value at t=0 on a straight line passing through a coordinate A $(0.02, \sigma(0.02))$ and a coordinate B $(400, \sigma(400))$ represented by Formula (3) satisfies Formula (4).

$$\left|\frac{\Delta\log(\sigma(t))}{\Delta t}\right| < 2.6 \qquad \text{Formula (1)},$$

$$y = \frac{\sigma(400) - \sigma(0.02)}{400 - 0.02}t + \sigma_0 \qquad \text{Formula (3)},$$

$$\sigma_0 > 10000 \qquad \text{Formula (4)}$$

[Stress relaxation measurement method]
A sample was sandwiched between measurement cells, a strain was loaded while melting the sample under the following conditions, and after stopping it, the stress $\sigma(t)$ [Pa] at the elapsed time t [s] was measured.
Measurement cells: parallel plates ($\Phi$25 mm), Distance between parallel plates: 1.5 mm, Melting temperature condition: 250°C, Loaded strain: 100%

**Description**

TECHNICAL FIELD

The present invention relates to a polyamide resin composition.

BACKGROUND ART

Polyamide resins have excellent mechanical characteristics, heat resistance and chemical resistance, so that they are developed for various uses as engineering plastics and used by various molding methods. Among these, utilization as blow-molded products by blow molding is also progressing.

In connection with the above, it has been proposed a polyamide resin composition containing a polyamide resin, a polyphenylene sulfide resin, an ethylene-based ionomer resin and an olefin-based elastomer resin, which is said to be excellent in blow moldability and low temperature toughness (for example, see Patent Document 1). In addition, it has been proposed a polyamide resin composition containing an aromatic polyamide resin, an impact modifier and a stabilizer, which is said that a blow molded product having a smooth surface appearance is obtained (for example, see Patent Document 2).

PRIOR ART DOCUMENTS

PATENT DOCUMENTS

Patent Document 1: JP 2007-204675A
Patent Document 2: JP 2006-523763A

SUMMARY OF THE INVENTION

PROBLEMS TO BE SOLVED BY THE INVENTION

In the polyamide resin composition of the prior art, there was sometimes a case where it was difficult to achieve both good surface appearance of a molded product and melt viscosity suitable for blow molding. In addition, blow-molded products are used for gas tank uses, etc., so that they are required to be further excellent in gas-barrier property and impact resistance even at a low temperature.

An object of the present invention is to provide a polyamide resin composition which is excellent in blow moldability and excellent in impact resistance at a low temperature while maintaining a good surface appearance of a molded product.

MEANS TO SOLVE THE PROBLEMS

The present invention relates to, for example, the following.

[1] A polyamide resin composition which comprises 40 to 85 parts by mass of a polyamide (A) and 10 to 20 parts by mass of an impact-resistant material (B) in 100 parts by mass of the polyamide resin composition, wherein an absolute value $|\Delta \log (\sigma(t))/\Delta t|$ [Pa/s] of a stress change rate obtained from a stress $\sigma(t)$ [Pa] obtained by the following stress relaxation measurement method satisfies Formula (1) at a time of an elapsed time t=0.1 [s], and in a stress relaxation curve in which data of the stress $\sigma(t)$ [Pa] and the elapsed time t [s] obtained by the following stress relaxation measurement method are plotted as the elapsed time t logarithmically represented on an x axis and the stress $\sigma(t)$ logarithmically represented on a y axis, an initial stress $\sigma_0$ [Pa] which is a value at t=0 on a straight line passing through a coordinate A (0.02, $\sigma(0.02)$) and a coordinate B (400, $\sigma(400)$) represented by Formula (3) satisfies Formula (4).

[Numerical formula 1]

$$\left| \frac{\Delta \log(\sigma(t))}{\Delta t} \right| < 2.6 \qquad \text{Formula (1)}$$

$$y = \frac{\sigma(400) - \sigma(0.02)}{400 - 0.02} t + \sigma_0 \qquad \text{Formula (3)}$$

$$\sigma_0 > 10000 \qquad \text{Formula (4)}$$

[Stress relaxation measurement method]

A sample was sandwiched between measurement cells, a strain was loaded while melting the sample under the following conditions, and after stopping it, the stress $\sigma(t)$ [Pa] at the elapsed time t [s] was measured.

Measurement cells: parallel plates ($\Phi$25 mm)

Distance between parallel plates: 1.5 mm

Melting temperature condition: 250°C

Loaded strain: 100%

[2] The polyamide resin composition of [1], wherein a value in which the stress $\sigma(t)$ [Pa] obtained by the above-mentioned stress relaxation measurement method is divided by a parison length L [mm] obtained by the following parison length measurement method satisfies Formula (5) at a time of an elapsed time t=0.1 [s].

[Numerical formula 2]

$$\frac{\sigma(t)}{L} > 13 \qquad \text{Formula (5)}$$

[Parison length measurement method]

A blow molding machine JB105 (manufactured by The Japan Steel Works, LTD.) was set to the following conditions, and a length of a parison at a time of extruding whole volume of the polyamide resin composition in an accumulator head from the pressure-controlled accumulator head was made a parison length L [mm].

Cylinder temperature: 250°C

Die core diameter: 56 mm

Die core outlet thickness: 2 mm

[3] The polyamide resin composition of [1], wherein a value in which the stress $\sigma\{t)$ [Pa] obtained by the above-mentioned stress relaxation measurement method is divided by a parison length L [mm] obtained by the following parison length measurement method satisfies Formula (5) at a time of an elapsed time t=0.1 [s].

[Numerical formula 3]

$$\frac{\sigma(t)}{L} > 13 \qquad \text{Formula (5)}$$

[Parison length measurement method]

A blow molding machine DA-50 (manufactured by Placo Co., Ltd.) was set to the following conditions, and a length of a parison at a time of extruding whole volume of the polyamide resin composition in an accumulator head from the pressure-controlled accumulator head was made a parison length L [mm].

Cylinder temperature: 250°C

Die core diameter: 50 mm

Die core outlet thickness: 2 mm

[4] A polyamide resin composition which comprises 40 to 85 parts by mass of a polyamide (A) and 10 to 20 parts by mass of an impact-resistant material (B) in 100 parts by mass of the polyamide resin composition, wherein an absolute value $|\Delta\log(\sigma(t))/\Delta t|$ [Pa/s] of a stress change rate obtained from a stress $\sigma(t)$ [Pa] obtained by the following stress relaxation measurement method satisfies Formula (1) at a time of an elapsed time t=0.1 [s], and a value in which the stress $\sigma(t)$ [Pa] obtained by the above-mentioned stress relaxation measurement method is divided by a parison length L [mm] obtained by the following parison length measurement method satisfies Formula (5) at a time of an elapsed time t=0.1 [s].

[Numerical formula 4]

$$\left|\frac{\Delta \log(\sigma(t))}{\Delta t}\right| < 2.6 \qquad \text{Formula (1)}$$

$$\frac{\sigma(t)}{L} > 13 \qquad \text{Formula (5)}$$

[Stress relaxation measurement method]

The above-mentioned polyamide resin composition was sandwiched between measurement cells, a strain was loaded while melting the polyamide resin composition under the following conditions, and after stopping it, the stress $\sigma(t)$ [Pa] at the elapsed time t [s] was measured.

Measurement cells: parallel plates ($\Phi$25 mm)

Distance between parallel plates: 1.5 mm

Melting temperature condition: 250°C

Loaded strain: 100%

[Parison length measurement method]

A blow molding machine JB105 (manufactured by The Japan Steel Works, LTD.) was set to the following conditions, and a length of a parison at a time of extruding whole volume of the polyamide resin composition in an accumulator head from the pressure-controlled accumulator head was made a parison length L [mm].

Cylinder temperature: 250°C

Die core diameter: 56 mm

Die core outlet thickness: 2 mm

[5] The polyamide resin composition of any of [1] to [4], wherein the polyamide resin (A) is a polyamide resin which is at least one kind selected from the group consisting of an aliphatic polyamide (A-1) and an aromatic polyamide (A-2).

[6] The polyamide resin composition of any of [1] to [5], which further comprises a heat resistant agent (C).

[7] The polyamide resin composition of any of [1] to [6], wherein the impact-resistant material (B) is at least one kind selected from the group consisting of an (ethylene and/or propylene)/$\alpha$-olefin-based copolymer, and an (ethylene and/or propylene)/($\alpha,\beta$-unsaturated carboxylic acid and/or unsaturated carboxylic acid ester)-based copolymer.

[8] The polyamide resin composition of [6] or [7], wherein the heat resistant agent (C) is at least one kind selected from the group consisting of a hindered phenol having a t-butyl group at an O-position and a phosphorous acid ester compound of a hindered phenol having a t-butyl group at an O-position.

[9] The polyamide resin composition of any of [1] to [8], which further comprises an olefin-based ionomer (D).

EFFECTS OF THE INVENTION

According to the present invention, a polyamide resin composition which is excellent in blow moldability and excellent in impact resistance at a low temperature while maintaining a good surface appearance of a molded product can be provided.

EMBODIMENTS TO CARRY OUT THE INVENTION

A first embodiment of the polyamide resin composition of the present invention is a polyamide resin composition which comprises 40 to 85 parts by mass of a polyamide (A) and 10 to 20 parts by mass of an impact-resistant material (B) in 100 parts by mass of the polyamide resin composition, wherein an absolute value $|\Delta \log (\sigma(t))/\Delta t|$ [Pa/s] of a stress change rate obtained from a stress $\sigma(t)$ [Pa] obtained by the following stress relaxation measurement method satisfies Formula (1) at a time of an elapsed time t=0.1 [s], and in a stress relaxation curve in which data of the stress $\sigma(t)$ [Pa] and the elapsed time t [s] obtained by the following stress relaxation measurement method are plotted as the elapsed time t logarithmically represented on an x axis and the stress $\sigma(t)$ logarithmically represented on a y axis, an initial stress $\sigma_0$ [Pa] which is a value at t=0 on a straight line passing through a coordinate A (0.02, $\sigma(0.02)$) and a coordinate B (400, $\sigma(400)$) represented by Formula (3) satisfies Formula (4).

[Numerical formula 5]

$$\left|\frac{\Delta \log(\sigma(t))}{\Delta t}\right| < 2.6 \qquad \text{Formula (1)}$$

$$y = \frac{\sigma(400) - \sigma(0.02)}{400 - 0.02} t + \sigma_0 \qquad \text{Formula (3)}$$

$$\sigma_0 > 10000 \qquad \text{Formula (4)}$$

A second embodiment of the polyamide resin composition of the present invention is a polyamide resin composition which is
a polyamide resin composition comprising 40 to 85 parts by mass of a polyamide (A) and 10 to 20 parts by mass of an impact-resistant material (B) in 100 parts by mass of the polyamide resin composition,
wherein an absolute value $|\Delta\log(\sigma(t))/\Delta t|$ [Pa/s] of a stress change rate obtained from a stress $\sigma(t)$ [Pa] obtained by the following stress relaxation measurement method satisfies Formula (1) at a time of an elapsed time t=0.1 [s], and
a value in which the stress $\sigma(t)$ [Pa] obtained by the above-mentioned stress relaxation measurement method is divided by a parison length L [mm] obtained by the following parison length measurement method satisfies Formula (5) at a time of an elapsed time t=0.1 [s].
[Numerical formula 6]

$$\left| \frac{\Delta\log(\sigma(t))}{\Delta t} \right| < 2.6 \qquad \text{Formula (1)}$$

$$\frac{\sigma(t)}{L} > 13 \qquad \text{Formula (5)}$$

[Stress relaxation measurement method]
The above-mentioned polyamide resin composition was sandwiched between measurement cells, a strain was loaded while melting the polyamide resin composition under the following conditions, and after stopping it, the stress $\sigma(t)$ [Pa] at the elapsed time t [s] was measured.
Measurement cells: parallel plates ($\Phi$25 mm)
Distance between parallel plates: 1.5 mm
Melting temperature condition: 250°C
Loaded strain: 100%
[Parison length measurement method]
A blow molding machine JB105 (manufactured by The Japan Steel Works, LTD.) was set to the following conditions, and a length of a parison at a time of extruding whole volume of the polyamide resin composition in an accumulator head from the pressure-controlled accumulator head was made a parison length L [mm].
Cylinder temperature: 250°C
Die core diameter: 56 mm
Die core outlet thickness: 2 mm

(A) Polyamide resin

The polyamide resin (A) contained in the polyamide resin composition contains at least one kind selected from the group consisting of an aliphatic polyamide (A-1) and an aromatic polyamide (A-2), and it is preferable to use the aliphatic polyamide (A-1) and the aromatic polyamide (A-2) in combination.

(A-1) Aliphatic polyamide

As the aliphatic polyamide, an aliphatic homopolyamide and an aliphatic copolymerized polyamide are mentioned.

(A-I-1) Aliphatic homopolyamide

The aliphatic homopolyamide (A-1-1) is a polyamide resin comprising one kind of a constitutional unit. The aliphatic homopolyamide (A-1-1) may be a material comprising at least one of one kind of a lactam and an aminocarboxylic acid which is a hydrolysate of the lactam, or may be a material comprising a combination of one kind of a diamine and one kind of a dicarboxylic acid.

As the lactam, ε-caprolactam, enantolactam, undecane lactam, dodecane lactam, α-pyrrolidone, α-piperidone, etc., may be mentioned. Among these, from the viewpoint of polymerization productivity, one kind selected from the group consisting of ε-caprolactam, undecane lactam and dodecane lactam is preferable.

Also, as the aminocarboxylic acid, 6-aminocaproic acid, 7-aminoheptanoic acid, 9-aminononanoic acid, 11-aminoundecanoic acid and 12-aminododecanoic acid are mentioned. Among these, from the viewpoint of polymerization productivity, one kind selected from the group consisting of 6-aminocaproic acid, 11-aminoundecanoic acid, and 12-aminododecanoic acid is preferable.

As the diamine, an aliphatic diamine such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, 2,2,4/2,4,4-trimethylhexamethylenediamine, etc.; and an alicyclic diamine such as 1,3-/1,4-cyclohexyldiamine, bis(4-aminocyclohexyl)methane, bis(4-aminocyclohexyl)propane, bis(3-methyl-4-aminocyclohexyl)methane, (3-methyl-4-aminocyclohexyl)-propane, 1,3-/1,4-bisaminomethylcyclohexane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, norbornanedimethyleneamine, etc., may be mentioned. Among these, from the viewpoint of polymerization productivity, an aliphatic diamine is preferable, and hexamethylenediamine is more preferable.

As the dicarboxylic acid, an aliphatic dicarboxylic acid such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, eicosanedioic acid, etc.; and an alicyclic dicarboxylic acid such as 1,3-/1,4-cyclohexanedicarboxylic acid, dicyclohexanemethane-4,4'-dicarboxylic acid, norbornanedicarboxylic acid, etc.; are mentioned. Among these, an aliphatic dicarboxylic acid is preferable, one kind selected from the group consisting of adipic acid, sebacic acid and dodecanedioic acid is more preferable, and sebacic acid or dodecanedioic acid is further preferable.

The aliphatic homopolyamide (A-1-1) may be specifically mentioned polycaprolactam (polyamide 6), polyenantolactam (polyamide 7), polyundecanelactam (polyamide 11), polylauryl lactam (polyamide 12), polyhexamethylene adipamide (polyamide 66), polytetramethylene dodecamide (polyamide 412), polypentamethylene azelamide (polyamide 59), polypentamethylene sebacamide (polyamide 510), polypentamethylene dodecamide (polyamide 512), polyhexamethylene azelamide (polyamide 69), polyhexamethylene sebacamide (polyamide 610), polyhexamethylene dodecamide (polyamide 612), polynonamethylene adipamide (polyamide 96), polynonamethylene azelamide (polyamide 99), polynonamethylene sebacamide (polyamide 910), polynonamethylene dodecamide (polyamide 912), polydecamethylene adipamide (polyamide 106), polydecamethylene azelamide (polyamide 109), polydecamethylene decamide (polyamide 1010), polydecamethylene dodecamide (polyamide 1012), polydodecamethylene adipamide (polyamide 126), polydodecamethylene azelamide (polyamide 129), polydodecamethylene sebacamide (polyamide 1210), polydodecamethylene dodecamide (polyamide 1212), polyamide 122, etc. The aliphatic homopolyamide (A-1-1) may be used a single kind alone or two or more kinds in combination.

Among these, from the viewpoint of polymerization productivity, the aliphatic homopolyamide (A-1-1) is preferably at least one kind selected from the group consisting of polyamide 6, polyamide 11, polyamide 12, polyamide 66, polyamide 610 and polyamide 612, more preferably at least one kind selected from polyamide 6, polyamide 11, polyamide 12, polyamide 610 and polyamide 612, and further preferably polyamide 6.

As the production apparatus of the aliphatic homopolyamide (A-1-1), there may be mentioned a known production apparatus such as a batch reaction vessel, a one-tank or multi-tank continuous reaction apparatus, a tubular continuous reaction apparatus, or a kneading reaction extruder such as a single-screw kneading extruder or a twin-screw kneading extruder. As the polymerization method, by using a known method such as melt polymerization, solution polymerization or solid phase polymerization, polymerization may be carried out at atmospheric pressure or by repeating reduced pressure and pressurization operation. These polymerization methods may be used alone or appropriately in combination.

A relative viscosity of the aliphatic homopolyamide (A-1-1) is measured in accordance with JIS K-6920, by dissolving 1 g of the polyamide resin in 100 ml of 96% conc. sulfuric acid and at 25°C. The relative viscosity of the aliphatic homopolyamide resin is preferably 2.7 or more, and more preferably 2.7 or more and 5.0 or less. Further, from the viewpoint of improving the effects of the present invention, it is further preferably 2.7 or more and less than 4.5. If it is 2.7 or more, the melt viscosity of the polyamide composition is not too low, whereby parison shape retention particularly at the time of blow molding is good even in extrusion molding, while if it is 5.0 or less, melt viscosity of the polyamide composition is not too high, whereby a uniform thickness of the molten resin can be obtained at the time of blow molding.

A terminal amino group concentration of the aliphatic homopolyamide (A-1-1) can be obtained by dissolving it in a mixed solvent of phenol and methanol, and subjecting to neutralization titration. The terminal amino group concentration of the aliphatic homopolyamide (A-1-1) is preferably 30 μmol/g or more, and more preferably 30 μmol/g or more and 50 μmol/g or less.

When the polyamide resin (A) contains the aliphatic homopolyamide (A-1-1), a content of the aliphatic homopolyamide (A-1-1) in the total amount of 100 parts by mass of the aliphatic the polyamide resin (A-1) is, for example, 30 parts by mass or more and 100 parts by mass or less from the viewpoint of molding processability, preferably 40 parts by mass or more and 100 parts by mass or less, and more preferably 50 parts by mass or more and 90 parts by mass or less.

The polyamide resin composition may contain two or more kinds of the aliphatic homopolyamides (A-1-1). Two or more kinds of the aliphatic homopolyamides (A-1-1) may be materials with different constitutional units to each other, or materials with different molecular weights (for example, number average molecular weights). When the polyamide resin composition contains two or more kinds of the aliphatic homopolyamides (A-1-1), existing polymerized products can be used, and it is possible to carry out adjustment of productivity in the kneading process and material design depending on molding processability.

When the polyamide resin (A) contains two or more kinds of aliphatic homopolyamides (A-1-1) having different relative viscosities, the relative viscosity of the polyamide resin (A) is preferably measured by the above-mentioned contents, and when the respective relative viscosities and their mixing ratio are known, an average value calculated by summing the values obtained by multiplying the respective relative viscosities by the mixing ratio may be made the relative viscosity of the polyamide resin (A).

(A-1-2) Aliphatic copolymerized polyamide

The aliphatic copolymerized polyamide (A-1-2) is a polyamide resin comprising two or more kinds of constitutional units. The aliphatic copolymerized polyamide (A-1-2) is a copolymer of two or more kinds of monomers selected from the group consisting of a combination of a diamine and a dicarboxylic acid, and a lactam or an aminocarboxylic acid. Here, the combination of the diamine and the dicarboxylic acid is deemed to be one kind of a monomer with a combination of one kind of a diamine and one kind of a dicarboxylic acid.

As the diamine, an aliphatic diamine such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, 2,2,4-/2,4,4-trimethylhexamethylenediamine, etc.; and an alicyclic diamine such as 1,3-/1,4-cyclohexyldiamine, bis(4-aminocyclohexyl)methane, bis(4-aminocyclohexyl)propane, bis(3-methyl-4-aminocyclohexyl)methane, (3-methyl-4-aminocyclohexyl)propane, 1,3-/1,4-bisaminomethylcyclohexane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, norbornanedimethyleneamine, etc., may be mentioned. The diamine is preferably at least one kind selected from the group consisting of these diamines, and from the viewpoint of polymerization productivity, preferably at least one kind selected from the group consisting of the aliphatic diamines, more preferably at least one kind selected from the group consisting of the linear aliphatic diamine, and further preferably hexamethylenediamine.

These diamines may be used a single kind or may be used two or more kinds in appropriate combination.

As the dicarboxylic acid, an aliphatic dicarboxylic acid such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, eicosanedioic acid, etc.; and an alicyclic dicarboxylic acid such as 1,3-/1,4-cyclohexanedicarboxylic acid, dicyclohexanemethane-4,4'-dicarboxylic acid, norbornanedicarboxylic acid, etc., may be mentioned. The dicarboxylic acid is preferably at least one kind selected from the group consisting of these acids.

These dicarboxylic acids may be used a single kind or may be used two or more kinds in appropriate combination.

As the lactam, ε-caprolactam, enantolactam, undecanelactam, dodecanelactam, α-pyrrolidone, α-piperidone, etc., are mentioned. Among these, from the viewpoint of polymerization productivity, at least one kind selected from the group consisting of ε-caprolactam, undecanelactam and dodecanelactam is preferable.

Also, as the aminocarboxylic acid, there may be mentioned 6-aminocaproic acid, 7-aminoheptanoic acid, 9-aminononanoic acid, 11-aminoundecanoic acid and 12-aminododecanoic acid. Among these, from the viewpoint of polymerization production, at least one kind selected from the group consisting of 6-aminocaproic acid, 11-aminoundecanoic acid and 12-aminododecanoic acid is preferable.

The aliphatic copolymerized polyamide (A-1-2) is specifically mentioned an aliphatic copolymerized polyamide such as caprolactam/hexamethylene diaminoadipic acid copolymer (polyamide 6/66), caprolactam/hexamethylene diaminoazelaic acid copolymer (polyamide 6/69), caprolactam/hexamethylene diaminosebacic acid copolymer (polyamide 6/610), caprolactam/hexamethylene diaminoundecanoic acid copolymer (polyamide 6/611), caprolactam/hexamethylene diaminododecanoic acid copolymer (polyamide 6/612), caprolactam/aminoundecanoic acid copolymer (polyamide 6/11), caprolactam/lauryl lactam copolymer (polyamide 6/12), caprolactam/hexamethylene diaminoadipic acid/lauryl lactam copolymer (polyamide 6/66/12), caprolactam/hexamethylene diaminoadipic acid/hexamethylene diaminosebacic acid copolymer (polyamide 6/66/610), caprolactam/hexamethylene diaminoadipic acid/hexamethylene diaminododecane dicarboxylic acid copolymer (polyamide 6/66/612), etc.

Among these, from the viewpoint of productivity, at least one kind selected from the group consisting of polyamide 6/66, polyamide 6/12 and polyamide 6/66/12 is preferable, polyamide 6/66 and polyamide 6/66/12 are more preferable, and polyamide 6/66 is particularly preferable.

These aliphatic copolymerized polyamides (A-1-2) may be used each alone or a mixture of two or more kinds.

As the production apparatus of the aliphatic copolymerized polyamide (A-1-2), there may be mentioned a known production apparatus such as a batch reaction vessel, a one-tank or multi-tank continuous reaction apparatus, a tubular continuous reaction apparatus, or a kneading reaction extruder such as a single-screw kneading extruder or a twin-screw kneading extruder. As the polymerization method, by using a known method such as melt polymerization, solution polymerization or solid phase polymerization, polymerization may be carried out at atmospheric pressure or by repeating reduced pressure and pressurization operation. These polymerization methods may be used alone or appropriately in combination.

The relative viscosity of the aliphatic copolymerized polyamide (A-1-2) is not particularly limited, and from the viewpoint of improving the effects of the present invention, the relative viscosity measured in accordance with JIS K-6920, by dissolving 1 g of the polyamide resin in 100 ml of 96% conc. sulfuric acid at 25°C is preferably 1.8 or more and 5.0 or less.

A terminal amino group concentration of the aliphatic copolymerized polyamide (A-1-2) can be obtained by dissolving the resin in a mixed solvent of phenol and methanol by neutralization titration. The terminal amino group concentration of the aliphatic copolymerized polyamide (A-1-2) is preferably 30 $\mu$mol/g or more, and more preferably 30 $\mu$mol/g or more and 50 $\mu$mol/g or less.

When the aliphatic polyamide (A-1) is contained in the polyamide resin (A), a total contained ratio of the aliphatic polyamide (A-1) contained in 100 parts by mass of the polyamide resin (A) is, for example, 50 parts by mass or more, preferably 70 parts by mass or more, and more preferably 90 parts by mass or more.

(A-2) Aromatic polyamide

The aromatic polyamide resin refers to an aromatic polyamide resin containing at least one component of an aromatic-based monomer and, for example, it is a polyamide resin using an aliphatic dicarboxylic acid and an aromatic diamine, or an aromatic dicarboxylic acid and an aliphatic diamine as starting materials, and obtainable by polycondensation of these materials.

In the present invention, the aromatic polyamide (A-2) has an effect of increasing melt viscosity and an effect of suppressing a crystallization rate.

As the aliphatic diamine and the aliphatic dicarboxylic acid of the starting materials, the same materials as the above-mentioned aliphatic polyamide resin can be mentioned.

As the aromatic diamine, metaxylylene diamine, paraxylylene diamine, etc., may be mentioned, and as the aromatic dicarboxylic acid, naphthalenedicarboxylic acid, terephthalic acid, isophthalic acid, phthalic acid, etc., may be mentioned.

Specific examples thereof may be mentioned polynonanemethylene terephthalamide (polyamide 9T), polyhexamethylene terephthalamide (polyamide 6T), polyhexamethylene isophthalamide (polyamide 6I), polyhexamethylene adipamide/-polyhexamethylene terephthalamide copolymer (polyamide 66/6T), polyhexamethylene terephthalamide/polycaproamide copolymer (polyamide 6T/6), polyhexamethylene adipamide/polyhexamethylene isophthalamide copolymer (polyamide 66/6I), polyhexamethylene isophthalamide/polycaproamide copolymer (polyamide 6I/6), polydodecamide/polyhexamethylene terephthalamide copolymer (polyamide 12/6T), polyhexamethylene adipamide/polyhexamethylene terephthalamide/polyhexamethylene isophthalamide copolymer (polyamide 66/6T/6I), polyhexamethylene adipamide/polycaproamide/polyhexamethylene isophthalamide copolymer (polyamide 66/6/6I), polyhexamethylene terephthalamide/polyhexamethylene isophthalamide copolymer (polyamide 6T/6I), polyhexamethylene terephthalamide/poly(2-methylpentamethylene terephthalamide) copolymer (polyamide 6T/M5T), polyxylylene adipamide (polyamide MXD6), and a mixture of these materials or a copolymerized resin, etc. Among these, polyamide 6T/6I is preferable.

As the aromatic polyamide (A-2) to be used in the present invention, particularly useful materials may be mentioned a amorphous partially aromatic copolymerized polyamide resin containing at least two components of aromatic-based monomer components. As the amorphous partially aromatic copolymerized polyamide resin, it is preferably a amorphous polyamide having a glass transition temperature, which is obtained by a peak temperature of loss elastic modulus at absolute drying obtained by measurement of dynamic viscoelasticity, of 100°C or higher.

Here, amorphous refers to be heat of crystal fusion measured by a differential scanning calorimeter (DSC) of 1 cal/g or less.

As the above-mentioned amorphous partially aromatic copolymerized polyamide resin, it is preferably a material comprising an aromatic dicarboxylic acid which comprises 40 to 95 mol% of a terephthalic acid component unit and 5 to 60 mol% of an isophthalic acid component unit, and an aliphatic diamine. As a preferable combination, there may be mentioned an equimolar salt of hexamethylenediamine and terephthalic acid and an equimolar salt of hexamethylenediamine and isophthalic acid.

Also, it is preferably a material comprising 99 to 60% by weight of a polyamide forming component which comprises an aliphatic diamine and an aromatic dicarboxylic acid comprising isophthalic acid and terephthalic acid and 1 to 40% by weight of an aliphatic polyamide component.

A polymerization degree of (A-2) the aromatic polyamide resin in the present invention is not particularly limited, and a relative viscosity, measured in accordance with JIS K 6810 in 98% sulfuric acid with a concentration of 1% of (A-2) the aromatic polyamide resin temperature at 25°C, is preferably 1.5 to 4.0, and more preferably 1.8 to 3.0.

When the aromatic polyamide (A-2) is contained in the polyamide resin (A), a total contained ratio of the aromatic polyamide (A-2) contained in 100 parts by mass of the polyamide resin (A) is, for example, less than 50 parts by mass, preferably less than 30 parts by mass, and more preferably less than 10 parts by mass.

The polyamide resin (A) preferably has a relative viscosity, measured in accordance with JIS K-6920, by dissolving 1 g of the polyamide resin in 100 ml of 96% conc. sulfuric acid at 25°C, of 2.7 or more, and more preferably 2.7 or more and 5.0 or less. Further, from the viewpoint of improving the effects of the present invention, it is more preferably 2.7 or more and less than 4.5. If it is 2.7 or more, melt viscosity of the polyamide composition is not too low, even in the extrusion molding, parison shape retention is particularly good at the blow molding. Also, if it is 5.0 or less, melt viscosity of the polyamide composition is not too high, uniform thickness of the melted resin can be obtained at the blow molding.

When the polyamide resin (A) contains two or more kinds of the polyamide resins having different relative viscosities (for example, at least one kind of the aliphatic homopolyamide (A-1-1) and at least one kind of the aliphatic copolymerized polyamide (A-1-2)), the relative viscosity of the polyamide resin (A) is preferably measured by the above-mentioned contents, and when the relative viscosities of the respective polyamide resins and their mixing ratio are known, an average value calculated by summing the values obtained by multiplying the respective relative viscosities by the mixing ratio may be made the relative viscosity of the polyamide resin (A).

From reactivity with the impact-resistant material (B), the terminal amino group concentration of the polyamide resin (A) is 30 $\mu$mol/g or more as a terminal amino group concentration obtained by the neutralization titration dissolving it in a mixed solvent of phenol and methanol, preferably in the range of 30 $\mu$mol/g or more and 110 $\mu$mol/g or less, and more preferably in the range of 30 $\mu$mol/g or more and 70 $\mu$mol/g or less. If it is 30 $\mu$mol/g or more, reactivity with the impact-resistant material (B) is good, and melt viscosity or impact resistance can be sufficiently obtained. Also, if it is 110 $\mu$mol/g or less, melt viscosity is not too high, and molding processability is good.

When the polyamide resin (A) contains two or more kinds of the polyamide resins having different terminal amino group concentrations (for example, at least one kind of the aliphatic homopolyamide (A-1-1) and at least one kind of the aliphatic copolymerized polyamide (A-1-2)), the terminal amino group concentration of the polyamide resin (A) is preferably measured by the above-mentioned neutralization titration, and when the terminal amino group concentrations of the respective polyamide resin and their mixing ratio are known, an average value calculated by summing the values obtained by multiplying the respective terminal amino group concentrations by the mixing ratio may be made the terminal amino group concentration of the polyamide resin (A).

The polyamide resin (A) is contained in an amount of 40 to 85 parts by mass in 100 parts by mass of the polyamide resin composition, preferably 50 to 85 parts by mass, more preferably 60 to 85 parts by mass, further preferably 65 to 84 parts by mass and particularly preferably 65 to 75 parts by mass. If the contained ratio of the polyamide resin (A) is 40 parts by mass or more, gas-barrier property is good, and if it is 85 parts by mass or less, low temperature physical properties and blow moldability are good.

(B) Impact-resistant material

The polyamide resin composition contains at least one kind of an impact-resistant material (B). As the impact-resistant material, a rubber-state polymer may be mentioned. The impact-resistant material preferably has flexural modulus measured in accordance with ASTM D-790 of 500 MPa or less.

The impact-resistant material (B) is specifically mentioned an (ethylene and/or propylene)/$\alpha$-olefin-based co-polymer, an (ethylene and/or propylene)/($\alpha$,$\beta$-unsaturated carboxylic acid and/or unsaturated carboxylic acid ester)-based copolymer, etc. These may be used one kind alone or two or more kinds in combination. The impact-resistant material (B) is preferably an ethylene/$\alpha$-olefin-based copolymer.

The (ethylene and/or propylene)/$\alpha$-olefin-based copolymer is a polymer in which ethylene and/or propylene and an $\alpha$-olefin having 3 or more or 4 or more carbon atoms are copolymerized.

As the $\alpha$-olefin having 3 or more carbon atoms, there may be mentioned propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc. These may be used one kind alone or two or more kinds in combination.

Also, the copolymer may be a material in which polyenes such as non-conjugated dienes, etc., are copolymerized. As the non-conjugated diene, 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbornene, 5-ethylidene-2-norbornene, 5-methylene-2-norbornene, 5-isopropylidene-2-norbornene, 6-chloromethyl-5-isopropylidene-2-norbornene, 2,3-diisopropylidene-5-norbornene, 2-ethylidene-3-isopropylidene-5-norbornene, 2-propenyl-2,5-norbornadiene, etc., may be mentioned. These may be used one kind alone or two or more kinds in combination.

The (ethylene and/or propylene)/($\alpha,\beta$-unsaturated carboxylic acid and/or unsaturated carboxylic acid ester)-based copolymer is a copolymer in which ethylene and/or propylene and an $\alpha,\beta$-unsaturated carboxylic acid and/or an unsaturated carboxylic acid ester monomer are copolymerized. As the $\alpha,\beta$-unsaturated carboxylic acid monomer, acrylic acid and methacrylic acid are mentioned. As the $\alpha,\beta$-unsaturated carboxylic acid ester monomer, a methyl ester, ethyl ester, propyl ester, butyl ester, pentyl ester, hexyl ester, heptyl ester, octyl ester, nonyl ester, decyl ester, etc., of these unsaturated carboxylic acids are mentioned. These may be used one kind alone or two or more kinds in combination.

In addition, the (ethylene and/or propylene)/$\alpha$-olefin-based copolymer and the (ethylene and/or propylene)/($\alpha,\beta$-unsaturated carboxylic acid and/or unsaturated carboxylic acid ester)-based copolymer to be used as the impact-resistant material (B) are polymers modified by a carboxylic acid and/or a derivative thereof. By modifying it with such a component, it becomes to contain a functional group having affinity to the polyamide resin (A) in the molecule.

As the functional group having affinity to the polyamide resin (A), a carboxyl group, an acid anhydride group, a carboxylic acid ester group, a carboxylic acid metal salt, a carboxylic acid imide group, a carboxylic acid amide group, an epoxy group, etc., may be mentioned.

Examples of the compounds containing these functional group may be mentioned acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endo-bicyclo-[2.2.1]-5-heptene-2,3-dicarboxylic acid and a metal salt of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endo-bicyclo-[2.2.1]-5-heptene-2,3-dicarboxylic anhydride, maleimide, N-ethyl maleimide, N-butyl maleimide, N-phenyl maleimide, acrylamide, methacrylamide, glycidyl acrylate, glycidyl methacrylate, glycidyl ethacrylate, glycidyl itaconate, glycidyl citraconate, etc. These can be used a single kind alone or two or more kinds in combination. Among these, maleic anhydride is preferable.

The (ethylene and/or propylene)/$\alpha$-olefin-based copolymer, and the (ethylene and/or propylene)/($\alpha,\beta$-unsaturated carboxylic acid and/or unsaturated carboxylic acid ester)-based copolymer to be used as the impact-resistant material (B) are polymers modified by the carboxylic acid and/or derivative thereof, and preferably polymers acid-modified by a unsaturated carboxylic acid or acid anhydride thereof, etc.

A content of the acid anhydride group in the impact-resistant material (B) is more than 25 $\mu$mol/g and less than 100 $\mu$mol/g, preferably 35 $\mu$mol/g or more and less than 95 $\mu$mol, and more preferably 40 $\mu$mol/g or more and 90 $\mu$mol/g or less. If the content thereof is more than 25 $\mu$mol/g, a composition having a high melt viscosity can be obtained, and a target thickness size can be obtained in the blow molding. Also, if the content is less than 100 $\mu$mol/g, melt viscosity is not too high, and molding can be favorably carried out by suppressing a load on the extruder. A content of the acid anhydride group possessed by the impact-resistant material (B) can be measured by neutralization titration with 0.1N KOH ethanol solution using a sample solution prepared by using toluene and ethanol, and phenolphthalein as an indicator.

When two or more kinds of the impact-resistant materials having different contents of the acid anhydride group are used as the impact-resistant material (B), a content of the acid anhydride group in the impact-resistant material (B) is preferably measured by neutralization titration toluene with 0.1N KOH ethanol solution using a sample solution prepared by using ethanol, and phenolphthalein as an indicator, and when the contents of the acid anhydride groups of the respective impact-resistant materials and their mixing ratio are known, an average value calculated by summing the values obtained by multiplying the contents of the respective acid anhydride groups by the mixing ratio may be made the content of the acid anhydride group of the impact-resistant material (B).

The impact-resistant material (B) preferably has an MFR measured at a temperature of 230°C and a load of 2,160 g in accordance with ASTM D1238 of 0.1 g/10 min or more to 10.0 g/10 min or less. If the MFR is 0.1 g/10 min or more, melt viscosity of the polyamide resin composition is not too high and, for example, the shape of the parison to become unstable is suppressed at the blow molding in extrusion molding, and the thickness of the molded product tends to be more uniform. Also, if the MFR is 10.0 g/10 min or less, drawdown of the parison does not become too large, and good blow moldability tends to be obtained.

The impact-resistant material (B) is contained in an amount of 10 to 20 parts by mass in 100 parts by mass of the polyamide resin composition, preferably 15 to 20 parts by mass, more preferably 16 to 19 parts by mass, and further preferably 17 to 18 parts by mass. If the content of the impact-resistant material (B) is within the above-mentioned range, gas-barrier property is good and low temperature physical properties and blow moldability are good.

(C) Heat resistant agent

It is also preferable that the polyamide resin composition contains a heat resistant agent (C). As the heat resistant agent, that which can improve heat resistance of the polyamide resin can be used, and an organic-based and inorganic-based heat resistant agents can be used depending on the purposes.

(Inorganic-based heat resistant agent)

As a kind of the inorganic-based heat resistant agent of the heat resistant agent,
as one of them, it is a metal compound (salt) belonging to group I transition series element, for example, a halide, a sulfate, an acetate, a salicylate, a nicotinate or a stearate of the metal may be mentioned.
Also, a halogenated salt of the alkali metal alone may be used or in combination with the metal compound (salt) belonging to the above-mentioned group I transition series element.
Specific examples thereof are potassium iodide, sodium iodide or potassium bromide.
Further, it is more effective to use a nitrogen-containing compound such as melamine, benzoguanamine, dimethylol urea or cyanuric acid, etc., in combination.

(Organic-based heat resistant agent)

The polyamide resin composition may contain at least one kind of an organic-based antioxidant as the heat resistant agent from the viewpoint of heat welding characteristics and heat resistant characteristics. By containing the organic-based antioxidant, even when the interval time is long at the blow molding, it is possible to further improve heat welding property while maintaining normal heat aging properties, physical properties, melt viscosity, etc. This is considered that, for example, by addition of the organic-based antioxidant, gelation due to thermal deterioration of the impact modifier is suppressed, thereby nucleation action is suppressed.
As the organic-based antioxidant, a phenol-based antioxidant, a phosphorus-based antioxidant, a sulfur-based antioxidant, etc., may be mentioned.
As the phenol-based antioxidant, a hindered phenol-based antioxidant is preferable, and a hindered phenol having a t-butyl group at an O-position is more preferable. The hindered phenol having a t-butyl group at an O-position may be specifically mentioned N,N'-hexamethylene bis(3,5-di-t-butyl-4-hydroxy-hycrocinnamamide, pentaerythrityl-tetrakis[3-(3,5-di-t-butyl-4-hydroxyphenyl)-propionate, ethylenebis(oxyethylene)bis[3-(5-tert-butyl-4-hydroxy-m-tolyl)propionate] and 3,9-bis[2-[3-(3-tert-butyl-4-hydroxy-5-methylphenyl)propionyloxy]-1,1-dimethylethyl]-2,4,8,10-tetraoxaspiro[5.5]undecane, and at least one kind selected from the group consisting of these is preferable.
As the phosphorus-based antioxidant, a phosphite compound of a hindered phenol and a hypophosphite compound of a hindered phenol are preferable, a phosphite compound of a hindered phenol having a t-butyl group at an O-position and a hypophosphite compound of a hindered phenol having a t-butyl group at an O-position are more preferable, and a phosphite compound of a hindered phenol having a t-butyl group at an O-position is further preferable. The phosphite compound of a hindered phenol having a t-butyl group at an O-position is specifically mentioned tris(2,4-di-t-butylphenyl)phosphite, bis(2,6-di-t-butyl-4-methylphenyl)pentaerythritol diphosphite. The hypophosphite compound of a hindered phenol having a t-butyl group at an O-position is specifically mentioned biphynyl containing tetrakis(2,4-di-tert-butylphenoxy)-4,4-biphynyldiphosphine as a main component, and a reaction product of phosphorous trichloride and 2,4-di-tert-butylphenol. At least one kind selected from the group consisting of these is preferable.
As the sulfur-based antioxidant, distearyl-3,3-thiodipropionate, pentaerythrityl tetrakis(3-laurylthiopropionate) and didodecyl(3,3'-thiodipropionate) are mentioned. At least one kind selected from the group consisting of these is preferable.
These organic-based antioxidants may be used a single kind alone or two or more kinds in combination.
The polyamide resin composition preferably contains at least one kind of a phenol-based antioxidant from the viewpoint of heat welding property, more preferably contains at least one kind of a phenol-based antioxidant and at least one kind of a phosphorus-based antioxidant, further preferably contains at least one kind selected from the group consisting of a hindered phenol having a t-butyl group at an O-position and a phosphite compound of a hindered phenol having a t-butyl group at an O-position, and particularly preferably a hindered phenol having a t-butyl group at an O-position and a phosphite compound of a hindered phenol having a t-butyl group at an O-position.

The heat resistant agent (C) is preferably contained in an amount of 0.01 to 1 part by mass in 100 parts by mass of the polyamide resin composition, more preferably 0.05 to 0.9 parts by mass, and further preferably 0.1 to 0.8 parts by mass. If the contained ratio of the heat resistant agent (C) is within the above-mentioned range, heat resistance and initial physical properties are good.

(D) Olefin-based ionomer

It is also preferable that the polyamide resin composition contains an olefin-based ionomer (D). The olefin-based ionomer (D) is used as a molding improver. As a resin of the olefin-based ionomer (D), an (ethylene and/or propylene)/($\alpha,\beta$-unsaturated carboxylic acid and/or unsaturated carboxylic acid ester)-based copolymer may be mentioned. The (ethylene and/or propylene)/($\alpha,\beta$-unsaturated carboxylic acid and/or unsaturated carboxylic acid ester)-based copolymer is a polymer in which ethylene and/or propylene and an $\alpha,\beta$-unsaturated carboxylic acid and/or an unsaturated carboxylic acid ester monomer are copolymerized. As the $\alpha,\beta$-unsaturated carboxylic acid monomer, acrylic acid and methacrylic acid are mentioned. As the $\alpha,\beta$-unsaturated carboxylic acid ester monomer, a methyl ester, an ethyl ester, a propyl ester, a butyl ester, a pentyl ester, a hexyl ester, a heptyl ester, an octyl ester, a nonyl ester, a decyl ester, etc., of these unsaturated carboxylic acids are mentioned. These may be used one kind alone or two or more kinds in combination. As the metal ion to be used for the ionomer, Na, K, Cu, Mg, Ca, Ba, Zn, Cd, Al, Fe, Co, Ni, etc., may be mentioned. Among these, an ionomer of an ethylene-methacrylic acid copolymer is preferable.

The olefin-based ionomer (D) is preferably contained in an amount of 1 to 25 parts by mass in 100 parts by mass of the polyamide resin composition, more preferably 2 parts by mass or more and less than 15 parts by mass, further preferably 5 to 10 parts by mass, and particularly preferably 5 to 8 parts by mass. If the contained ratio of the olefin-based ionomer (D) is within the above-mentioned range, thickness uniformity and blow moldability are good.

(E) Additives

The polyamide resin composition may appropriately contain a functionality imparting agent such as a surfactant, a dye, a pigment, a fibrous reinforcing material, a particulate reinforcing material, a plasticizer, an antioxidant, a foaming agent, a weathering agent, a crystal nucleating agent, a crystallization accelerator, a mold releasing agent, a lubricant, an antistatic agent, a flame retardant, a flame retardant auxiliary, a coloring agent, etc., depending on the purpose, etc. For the purpose of improving the effects of the present invention, the polyamide resin composition preferably contains an antioxidant.

The optional additive(s) (E) preferably is contained in an amount of 0.01 to 0.3 part by mass, and more preferably 0.05 to 0.2 parts by mass.

[Polyamide resin composition]

In the polyamide resin composition, an absolute value |Δlog ($\sigma$(t))/Δ|[Pa/s] of a stress change rate obtained from a stress $\sigma$(t) [Pa] obtained by the following stress relaxation measurement method satisfies Formula (1) at a time of an elapsed time t=0.1 [s].

[Numerical formula 7]

$$\left| \frac{\Delta \log(\sigma(t))}{\Delta t} \right| < 2.6 \qquad \text{Formula (1)}$$

The above-mentioned stress relaxation measurement was carried out by the following method.

A sample was sandwiched between measurement cells, a strain was loaded while melting the sample under the following conditions, and after stopping it, the stress $\sigma$(t) [Pa] at the elapsed time t [s] was measured.

Measurement cells: parallel plates ($\Phi$25 mm)
Distance between parallel plates: 1.5 mm
Melting temperature condition: 250°C
Loaded strain: 100%

The absolute value |Δlog ($\sigma$(t))/Δt| [Pa/s] of a stress change rate is preferably less than 2.5 at the elapsed time t =0.1 [s], more preferably less than 2.2, and further preferably less than 2.0.

The absolute value |Δlog ($\sigma$(t))/Δt| [Pa/s] of a stress change rate may satisfy Formula (2) at the elapsed time of 0.05≦t≦0.1 [s], and further preferably the absolute value |Δlog ($\sigma$(t))/Δt| [Pa/s] of a stress change rate may satisfy Formula (2) at the elapsed time of 0.09≦t≦0.1 [s].

[Numerical formula 8]

$$\left|\frac{\Delta \log(\sigma(t))}{\Delta t}\right| < \left|2.91\log(t)+4.1\right| \qquad \text{Formula (2)}$$

When the absolute value $|\Delta\log(\sigma(t))/\Delta t|$ [Pa/s] of a stress change rate satisfies the above-mentioned Formula (1) or Formula (2), parison retention characteristics are good and blow moldability is good.

Further, in the first embodiment of the polyamide resin composition, in addition to satisfying the above-mentioned Formula (1) at the elapsed time t=0.1 [s], in a stress relaxation curve in which data of the stress $\sigma(t)$ [Pa] and the elapsed time t [s] obtained by the above-mentioned stress relaxation measurement method are plotted as the elapsed time t logarithmically represented on an x axis and the stress $\sigma(t)$ logarithmically represented on a y axis, an initial stress $\sigma_0$ [Pa] which is a value at t=0 on a straight line passing through a coordinate A (0.02, $\sigma(0.02)$) and a coordinate B (400, $\sigma(400)$) represented by Formula (3) satisfies Formula (4).

[Numerical formula 9]

$$y = \frac{\sigma(400) - \sigma(0.02)}{400 - 0.02}t + \sigma_0 \qquad \text{Formula (3)}$$

[Numerical formula 10]

$$\sigma_0 > 10000 \qquad \text{Formula (4)}$$

The initial stress $\sigma_0$ [Pa] in Formula (4) is preferably $\sigma_0 > 15{,}000$, more preferably $\sigma_0 > 20{,}000$, further preferably $\sigma_0 > 25{,}000$, and particularly preferably $\sigma_0 > 30{,}000$.

The initial stress $\sigma_0$ [Pa] represents an ideal stress value at the elapsed time t=0 [s] of the stress relaxation measurement. When the initial stress $\sigma_0$ [Pa] led from Formula (3) satisfies the above-mentioned formula, parison retention characteristics are good and blow moldability is good.

Or else, in the second embodiment of the polyamide resin composition, in addition to satisfying the above-mentioned Formula (1) at the elapsed time t=0.1 [s], a value obtained by dividing the stress $\sigma(t)$ [Pa] obtained by the above-mentioned stress relaxation measurement method by a parison length L [mm] obtained by the following parison length measurement method satisfies Formula (5) at the time of the elapsed time t=0.1 [s].

[Numerical formula 11]

$$\frac{\sigma(t)}{L} > 13 \qquad \text{Formula (5)}$$

The parison length was measured by the following method.

A blow molding machine JB105 (manufactured by The Japan Steel Works, LTD.) was set to the following conditions, and a length of a parison at a time of extruding whole volume of the polyamide resin composition in an accumulator head from the pressure-controlled accumulator head was made a parison length L [mm].

Cylinder temperature: 250°C
Die core diameter: 56 mm
Die core outlet thickness: 2 mm
Incidentally, the above-mentioned measurement method preferably satisfies Accumulator content discharge amount: 1,000 cc
Accumulation discharge time: within 15 seconds.

The above-mentioned $\sigma(t)/L$ preferably exceeds 15, and more preferably exceeds 17. The stress $\sigma(t)$ [Pa]/the parison length L [mm] represents a stress (expansion force) applied by the polyamide resin composition extruded from a blow molding machine in a direction perpendicular to the direction of its own weight.

When the stress $\sigma(t)$ [Pa]/the parison length L [mm] satisfies the above-mentioned formula, parison retention characteristics are good and blow moldability is good.

The first embodiment of the polyamide resin composition preferably further satisfies the second embodiment. That is, in the first embodiment of the polyamide resin composition, it is further preferable that a value obtained by dividing the stress σ(t) [Pa] obtained by the above-mentioned stress relaxation measurement method by the parison length L [mm] obtained by the above-mentioned parison length measurement method satisfies Formula (5) at the time of the elapsed time t=0.1 [s].

In addition, in the first embodiment of the polyamide resin composition, it is preferable that a value obtained by dividing the stress σ(t) [Pa] obtained by the above-mentioned stress relaxation measurement method by a parison length L [mm] obtained by the following parison length measurement method satisfies Formula (5) at the time of the elapsed time t=0.1 [s].

The parison length was measured by the following method.

A blow molding machine DA-50 (manufactured by Placo Co., Ltd.) was set to the following conditions, and a length of a parison at a time of extruding whole volume of the polyamide resin composition in an accumulator head from the pressure-controlled accumulator head was made a parison length L [mm].

Cylinder temperature: 250°C

Die core diameter: 50 mm

Die core outlet thickness: 2 mm

Incidentally, the above-mentioned measurement method preferably satisfies

Accumulator content discharge amount: 1,000 cc

Accumulation discharge time: within 15 seconds.

Even when the parison length is measured by this method, the above-mentioned σ(t) /L is preferably exceeding 15, and more preferably exceeding 17.

The method for producing the polyamide resin composition is not particularly limited and, for example, the following method can be applied.

For mixing the polyamide resin (A), the impact-resistant material (B) and other optional components, a commonly known melt kneader such as a single screw or twin screw extruder, a Banbury mixer, a kneader, and a mixing roll is used. For example, any of the methods may be used, using a twin-screw extruder, such as a method in which all raw materials are incorporated and then melt-kneaded, a method in which part of the raw materials are incorporated and then melt-kneaded, and remaining raw materials are further incorporated and melt-kneaded, or a method in which after incorporating part of the raw materials, and then the remaining raw materials are mixed using a side feeder during melt-kneading, etc.

The polyamide resin composition has a melt viscosity excellent in moldability, and even when it is stayed during the molding, it is excellent in surface appearance of the molded product, so that it can be suitably used for producing blow-molded products by blow molding. Moreover, it can be suitably used for producing extrusion molding products by extrusion molding.

A method for producing blow-molded products from the polyamide resin by blow molding is not particularly limited, and a well-known method can be utilized. In general, a parison is formed by using a usual blow molding machine, and then, blow molding may be carried out. A preferable resin temperature at the time of forming the parison is preferably in a temperature range higher by 10°C to 70°C than the melting point of the polyamide resin composition.

A method for producing extrusion molding products from the polyamide resin by extrusion molding is not particularly limited, and a well-known method can be utilized.

In addition, it is also possible to obtain a multilayer structure by subjecting to co-extrusion with a polyolefin such as polyethylene, etc., or other thermoplastic resins, and then, subjecting to blow molding. In this case, it is also possible to provide an adhesive layer between the polyamide resin composition layer and other thermoplastic resin layer such as polyolefin, etc. In the case of a multilayer structure, the polyamide resin composition of the present invention can be used for any of the outer layer and the inner layer.

The blow-molded products by blow molding and the extrusion molding products by extrusion molding are not particularly limited, and there may be mentioned various uses including automobile parts such as spoilers, air intake ducts, intake manifolds, resonators, fuel tanks, gas tanks, fuel filler tubes, fuel delivery pipes, and other various kinds of hoses, tubes and tanks, mechanical parts such as power tool housings and pipes, as well as electrical and electronic parts, household and office supplies, building materials-related parts, furniture parts, etc., and among these, it is more suitably used for high-pressure gas containers since the molded product of the polyamide resin composition of the present invention is excellent in gas-barrier property.

EXAMPLES

In the following, the present invention is explained in more detail by referring to Examples and Comparative Examples, but the present invention is not limited by these Examples. Incidentally, physical properties evaluation method of the resin and the molded product used in Examples and Comparative Examples are shown below.

(Blow moldability)

Blow moldability was confirmed by using a blow molding machine JB105 manufactured by The Japan Steel Works, LTD. The measurement conditions were that the resin was discharged from an accumulator head under the setting of a cylinder temperature of 250°C, a screw rotation speed of 30 rpm, a 1-liter bottle, a die core diameter of 56 mm, and a die core outlet thickness of 2 mm, then, the resin was hold for 1 minutes and the following characteristics were evaluated according to the following criteria.

(1) Parison retention characteristics

○: An amount of draw down at the time lapsing 5 seconds after extruding parison of 800 mm is less than 50 mm
X: An amount of draw down at the time lapsing 5 seconds after extruding parison of 800 mm is 50 mm or more

(2) Amount of draw down after 5 seconds
A length of hanging down of the resin from the accumulator head at the time lapsing 5 seconds after extruding parison was measured with a tape measure.
(3) Thickness uniformity
It was judged with naked eyes, and evaluated by the following criteria.

○: There is no unevenness on the inner surface and is uniform.
×: There is unevenness on the inner surface.

(4) Inner surface yellowing

○: There is no difference in color tone between inner and outer surfaces.
×: There is a difference in color tone between inner and outer surfaces.

(Melt viscosity)

The melt viscosity was measured using Capillograph 1D type P-C manufactured by TOYO SEIKI Co., Ltd. At a measurement temperature of 250°C, and using an orifice having a hole diameter of 2.095 mm and a length of 8 mm (L/D=10), melt viscosities at a shear rate of $12.16sec^{-1}$, $121.6sec^{-1}$ and $1216sec^{-1}$ were measured.

○: Melt viscosity at a shear rate of $12.16 sec^{-1}$: 9,000 Pa·s or more
X: Melt viscosity at a shear rate of $12.16 sec^{-1}$: less than 9,000 Pa·s

(Low temperature characteristics)

ISO standard TYPE-A or TYPE-B test piece was prepared by injection molding and used for data acquisition of mechanical properties.
With regard to tensile stress at yield, tensile strain at yield and tensile strain at break, in accordance with ISO527-1 and 2, these were measured at -60°C using a tensile tester model 5567 manufactured by Instron.
With regard to Charpy impact strength, in accordance with ISO179-1, using a Charpy impact tester No.258-PC manufactured by Yasuda Seiki Seisakusho Ltd., edge wise impact test was carried out at 23°C and -40°C using a test piece having a thickness of 4 mm with A notch. (n=10)

○: Tensile strain at break at -60°C is 20% or more and a Charpy impact strength at -40°C exceeds 20 kJ/m$^2$
×: Tensile strain at break at -60°C is less than 20% or a Charpy impact strength at -40°C is 20 kJ/m$^2$ or less

(Gas barrier property)

In accordance with ISO15105-1, hydrogen permeability of a thickness of 1 mm was measured at 15°C.

○: Hydrogen permeability coefficient is $3 \times 10^{-16}$ mol·m/(m$^2$·s·Pa) or less
Δ: Hydrogen permeability coefficient exceeds $3 \times 10^{-16}$ mol·m/(m$^2$·s·Pa) and $1 \times 10^{-15}$ mol·m/(m$^2$·s·Pa) or less
X: Hydrogen permeability coefficient exceeds $1 \times 10^{-15}$ mol·m/(m$^2$·s·Pa)

(Measurement of melting point Tm and crystallization temperature Tc)

Using PYRIS Diamond DSC manufactured by Perkin Elmer, it was measured by raising a temperature at a rate of 20°C/min under nitrogen atmosphere.

○: Tm-Tc exceeds 40°C
× : Tm-Tc is 40°C or less

Tm represents a melting point and Tc represents a crystallization temperature, and when Tm-Tc exceeds 40°C, molding processing becomes easy.

(Stress characteristics)

Using a melt viscoelasticity measurement device ARES (manufactured by TA Instruments),
a sample was sandwiched between measurement cells, a strain was loaded while melting the sample under the following conditions, and after stopping it, the stress $\sigma(t)$
[Pa] at the elapsed time t [s] was measured.
Measurement cells: parallel plates ($\Phi$25 mm)
Distance between parallel plates: 1.5 mm
Melting temperature condition: 250°C
Loaded strain: 100%

(Parison length)

Examples 1 to 6 and Comparative Examples 1 to 5 were measured by the following measurement method.
A blow molding machine JB105 (manufactured by The Japan Steel Works, LTD.) was set to the following conditions, and a length of a parison at a time of extruding whole volume of the polyamide resin composition in an accumulator head from the pressure-controlled accumulator head was made a parison length L [mm].
Cylinder temperature: 250°C
Accumulator content discharge amount: 1,000 cc
Accumulation discharge time: within 15 seconds
Die core diameter: 56 mm
Die core outlet thickness: 2 mm
Examples 7 to 9 were measured by the following measurement method. A blow molding machine DA-50 (manufactured by Placo Co., Ltd.) was set to the following conditions, and a length of a parison at a time of extruding whole volume of the polyamide resin composition in an accumulator head from the pressure-controlled accumulator head was made a parison length L [mm] and measured.
Cylinder temperature: 250°C
Accumulator content discharge amount: 1,000 cc
Accumulation discharge time: within 15 seconds.
Die core diameter: 50 mm
Die core outlet thickness: 2 mm
With regard to the measurement method of the parison length of Examples 1 to 6 and Comparative Examples 1 to 5, and the measurement method of the parison length of Examples 7 to 9, although the molding machine and the die core diameter are different, these are the differences capable of performing comparison and evaluation, which can be applicable to blow moldability evaluation.

[Examples 1 to 9 and Comparative Examples 1 to 5]

Each component described in Table 1 was melt-kneaded with a TEX44HCT twin-screw kneader having a cylinder diameter of 44 mm L/D35 at a screw rotation of 170 rpm and a discharge rate of 50 kg/hrs to prepare pellets of the desired polyamide resin composition. In Comparative Example 5, commercially available resin pellets were used as such. Incidentally, the numerical value of the composition in the table is parts by mass, and the whole resin composition is made 100 parts by mass.
The obtained pellets were used for the above-mentioned physical property evaluation. The obtained results are shown in Table 1.
The abbreviations in the table are as follows.

PA6: polyamide 6, product name "1030B" available from Ube Industries, Ltd. PA6/66/12: polyamide 6/66/12, product name "6434B" available from Ube Industries, Ltd.

PA6/66: polyamide 6/66, product name "5034B", available from Ube Industries, Ltd. Aromatic PA6T/6I: polyamide 6T/6I, product name "Grivory G21" available from EMS-CHEMIE (Japan) Co., Ltd.

HDPE: high-density polyethylene, product name "Hi-zex8200B" available from Prime Polymer Co., Ltd.

m-EBR-1: maleic anhydride-modified ethylene-butene copolymer, product name "MH5020" available from Mitsui Chemicals, Inc.

m-EBR-2: maleic anhydride-modified ethylene-butene copolymer, product name "MH5010" available from Mitsui Chemicals, Inc.

EBR: ethylene-butene copolymer, product name "TX610" available from Mitsui Chemicals, Inc.

CoEMA: ionomer using ethylene-methacrylic acid copolymer as a resin, and Zn as a metal ion, product name "HIMILAN 1706" available from Mitsui-Dupont Chemical Co., Ltd.

Spreading oil: nonionic surfactant, product name "Value-7220" available from Marubishi Oil Chemical Co., Ltd.

Heat resistant agent 1: phenol-based antioxidant (N,N'-hexamethylene bis(3,5-di-t-butyl-4-hydroxy-hydrocinnamamide)

Heat resistant agent 2: phosphorus-based antioxidant (tris(2,4-di-t-butylphenyl)-phosphite)

Heat resistant agent 3: phenol-based antioxidant (3,9-bis[2-[3-(3-tert-butyl-4-hydroxy-5-methylphenyl)propionyloxy]-1,1-dimethylethyl]-2,4,8,10-tetraoxaspiro[5.5]undecane)

Heat resistant agent 4: sulfur-based antioxidant (pentaerythrityltetrakis(3-laurylthiopropionate))

[Table 1]

Table 1

| | | | Unit | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|
| Composition | (A) | PA6 | Part(s) by mass | 56.65 | 49.15 | 76.65 | 56.65 | 56.65 | 49.15 | 44.15 | 49.15 | 44.15 | 60.15 | 52.15 | 50.15 | 34.15 | |
| | | PA6/66/12 | | 20.00 | 20.00 | | 20.00 | | | 20.00 | 20.00 | 20.00 | 20.00 | 20.00 | 20.00 | 20.00 | |
| | | PA6/66 | | | | | | 20.00 | 20.00 | | | | | | | | |
| | | Aromatic PA 6T/6I | | 5.00 | 5.00 | 5.00 | 5.00 | 5.00 | 5.00 | 5.00 | 5.00 | 5.00 | 5.00 | 5.00 | 5.00 | 5.00 | |
| | | | | | | | | | | | | | | | | | 100 |
| | (B) | m-EBR-1 | | 17.50 | 17.50 | 17.50 | 17.50 | 17.50 | 17.50 | 12.50 | 12.50 | 17.50 | 14.00 | 22.00 | 24.00 | | |
| | | m-EBR-2 | | | | | | | | | | | | | | 20.00 | |
| | | EBR | | | | | | | | | | | | | | 20.00 | |
| | (D) | CoEMA | | | 7.50 | | | | 7.50 | 17.50 | 12.50 | 12.50 | | | | | |
| | | Impregnated oil | | 0.10 | 0.10 | 0.10 | 0.10 | 0.10 | 0.10 | 0.10 | 0.10 | 0.10 | 0.10 | 0.10 | 0.10 | 0.10 | |
| | (C) | Heat resistant agent 1 | | 0.50 | 0.50 | 0.50 | | 0.50 | 0.50 | 0.50 | 0.50 | 0.50 | 0.50 | 0.50 | 0.50 | 0.50 | |
| | | Heat resistant agent 2 | | 0.25 | 0.25 | 0.25 | | 0.25 | 0.25 | 0.25 | 0.25 | 0.25 | 0.25 | 0.25 | 0.25 | 0.25 | |
| | | Heat resistant agent 3 | | | | | 0.50 | | | | | | | | | | |
| | | Heat resistant agent 4 | | | | | 0.25 | | | | | | | | | | |

(continued)

| | | Unit | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|---|
| Stress characteristics and parison length | Elapsed time $t_t$ | s | 0.10 | 0.10 | 0.10 | 0.10 | 0.10 | 0.10 | 0.10 | 0.10 | 0.10 | 0.10 | 0.10 | - | - | 0.11 |
| | Stress $\sigma(t_1)$ ($\times 10^3$) | Pa | 14 | 28 | 12 | 14 | 18 | 31 | 37 | 37 | 44 | 17 | 24 | - | - | 54 |
| | $\lvert \varDelta \log(\sigma(t_1))/\varDelta t \rvert$ | Pa/s | 2.5 | 1.9 | 2.5 | 2.5 | 2.2 | 1.2 | 1.3 | 1.5 | 1.2 | 2.9 | 1.7 | - | - | 1.1 |
| | $\sigma(0.02)$ | Pa | 32,471 | 48,949 | 27,600 | 32,471 | 38,092 | 51,421 | 58,666 | 61,465 | 62.529 | 9,716 | 43,799 | - | - | 66,637 |
| | $\sigma(400)$ | Pa | 464 | 1888 | 394 | 464 | 1044 | 3897 | 4743 | 3362 | 7714 | 41 | 2982 | - | - | 345 |
| | Initial stress $\sigma 0$ in Formula (3) ($\times 10^4$) | Pa | 3.24 | 4.69 | 2.76 | 3.24 | 3.81 | 5.14 | 5.87 | 6.15 | 6.25 | 0.97 | 4.38 | - | - | 6.66 |
| | Parison length L | mm | 770 | 670 | - | 770 | - | - | 550 | 600 | 600 | 1295 | 930 | - | - | 560 |
| | $\alpha(t_1)/L$ | Pa/mm | 19 | 41 | - | 19 | - | - | 68 | 61 | 73 | 13 | 26 | - | - | 96 |
| Blow moldability | Parison retention characteristics | | ○ | ○ | ○ | ○ | ○ | ○ | ○ | ○ | ○ | × | ○ | ○ | ○ | ○ |
| | Draw down amount after 5 sec ≤ 50 | cm | 40 | 4 | - | 40 | - | - | 0 | 5 | 0 | 53 | 19 | 3 | 20 | -8 |
| | Thickness uniformity | | ○ | ○ | ○ | ○ | ○ | ○ | ○ | ○ | ○ | × | × | × | × | ○ |
| | Inner surface yellowing | | ○ | ○ | ○ | × | ○ | ○ | ○ | ○ | ○ | ○ | O | ○ | ○ | ○ |
| Melt viscosity | Melt viscosity | | ○ | ○ | ○ | ○ | ○ | ○ | ○ | ○ | ○ | × | ○ | ○ | ○ | ○ |
| | 12.16sec-1 | Pa·s | 11,730 | 14,880 | 9,970 | 11.150 | - | - | 15,640 | 13,320 | 17,890 | 8,210 | 15,720 | 21,222 | - | 10.230 |
| | 121.6-ec-1 | Pa·s | 3,950 | 4,360 | 3,360 | 3,68D | - | - | 4,020 | 3,750 | 4,546 | 3,180 | 4,800 | 6,480 | - | 2,620 |
| | 1216sec-1 | Pa·s | 1,050 | 1,080 | 890 | 1,000 | - | - | 962 | 886 | 966 | 810 | 1,160 | 1,566 | - | 510 |

| | | Unit | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|---|
| Low temperature characteristics | Low temperature characteristics | | ○ | ○ | - | ○ | - | - | ○ | ○ | ○ | × | ○ | ○ | ○ | × |
| | Tensile stress at yield-60°C | MPa | 90 | 85 | - | 90 | - | - | 90 | 93 | 85 | 96 | 83 | 78 | 64 | 52 |
| | Tensile strain at yield -60°C | % | 10.3 | 10.9 | - | 10.3 | - | - | 11.4 | 10.8 | 11.4 | 9.6 | 10.8 | 12.0 | 11.0 | 5.5 |
| | Tensile strain at break-60°C | % | 22 | 24 | - | 21 | - | - | 26 | 22 | 25 | 17 | 26 | 27 | 60 | 15 |
| | Charpy Impact strength 23°C | $kJ/m^2$ | 139 | 150 | - | 135 | - | - | 163 | 161 | 153 | 140 | 138 | 150 | 104 | 70 |
| | Charpy impact strength -40°C | $kJ/m^2$ | 35 | 95 | - | 30 | - | - | 117 | 96 | 117 | 33 | 81 | 90 | 101 | 40 |
| Gas barrier property | Gas barrier property | | ○ | ○ | - | ○ | - | - | - | - | - | ○ | Δ | Δ | Δ | × |
| | Hydrogen permeability coefficient | $mol \cdot m/(m^2 \cdot s \cdot Pa)$ | $3 \times 10^{-16}$ | $3 \times 10^{-16}$ | - | $3 \times 10^{-16}$ | - | - | - | - | - | $2 \times 10^{-16}$ | $4 \times 10^{-16}$ | $4 \times 10^{-16}$ | $5\text{-}6 \times 10^{-16}$ | $2 \times 10^{-15}$ |
| Melting point-crystallization temperature | Tm-Tc | | ○ | ○ | - | ○ | - | - | ○ | ○ | ○ | ○ | × | × | × | - |
| | Tm 2nd | °C | 216 | 217 | - | 218 | - | - | 216.4 | 216.8 | 216.8 | 217 | 216 | 216 | 214 | - |
| | Tc | °C | 171 | 167 | - | 173 | - | - | 164 | 163.7 | 165.4 | 167 | 175 | 176 | 179 | - |
| | Tm-Tc | °C | 45 | 50 | - | 45 | - | - | 52 | 53 | 51 | 50 | 40 | 40 | 35 | - |

From the above-mentioned results, it can be understood that, in the polyamide resin composition of the present invention, from Comparative Examples 2 to 4, if the amount of the impact-resistant material (B) is larger than the range of the invention of the present application, molding processability and gas-barrier property are poor, and from Comparative Example 1, if Formula (1) is not satisfied, the initial stress $\sigma_0$ led from Formula (3) does not satisfy Formula (4), and Formula (5) is not satisfied, molding processability, melt viscosity and low temperature physical properties are poor. In Comparative Example 5 using high density polyethylene, it can be understood that low temperature physical properties and gas-barrier property are poor.

## Claims

1. A polyamide resin composition which comprises 40 to 85 parts by mass of a polyamide (A) and 10 to 20 parts by mass of an impact-resistant material (B) in 100 parts by mass of the polyamide resin composition,
   wherein an absolute value $|\Delta \log (\sigma(t))/\Delta t|$ [Pa/s] of a stress change rate calculated from a stress $\sigma(t)$ [Pa] obtained by the following stress relaxation measurement method satisfies the formula (1) at a time of an elapsed time t=0.1 [s], and
   in a stress relaxation curve in which data of the stress $\sigma(t)$ [Pa] and the elapsed time t [s] obtained by the following stress relaxation measurement method are plotted as the elapsed time t logarithmically represented on an x axis and the stress $\sigma(t)$ logarithmically represented on a y axis, an initial stress $\sigma_0$ [Pa] which is a value at t=0 on a straight line passing through a coordinate A (0.02, $\sigma(0.02)$) and a coordinate B (400, $\sigma(400)$) represented by Formula (3) satisfies Formula (4).
   [Numerical formula 1]

$$\left| \frac{\Delta \log(\sigma(t))}{\Delta t} \right| < 2.6 \qquad \text{Formula (1)}$$

$$y = \frac{\sigma(400) - \sigma(0.02)}{400 - 0.02} t + \sigma_0 \qquad \text{Formula (3)}$$

$$\sigma_0 > 10000 \qquad \text{Formula (4)}$$

   [Stress relaxation measurement method]
   A sample was sandwiched between measurement cells, a strain was loaded while melting the sample under the following conditions, and after stopping it, the stress $\sigma(t)$ [Pa] at the elapsed time t [s] was measured.
   Measurement cells: parallel plates ($\Phi$25 mm)
   Distance between parallel plates: 1.5 mm
   Melting temperature condition: 250°C
   Loaded strain: 100%

2. The polyamide resin composition according to Claim 1, wherein a value obtained by dividing the stress $\sigma(t)$ [Pa] obtained by the stress relaxation measurement method by a parison length L [mm] obtained by the following parison length measurement method satisfies Formula (5) at a time of an elapsed time t=0.1 [s].
   [Numerical formula 2]

$$\frac{\sigma(t)}{L} > 13 \qquad \text{Formula (5)}$$

   [Parison length measurement method]
   A blow molding machine JB105 (manufactured by The Japan Steel Works, LTD.) was set to the following conditions, and a length of a parison at a time of extruding whole volume of the polyamide resin composition in an accumulator head from the pressure-controlled accumulator head was made a parison length L [mm].
   Cylinder temperature: 250°C
   Die core diameter: 56 mm

Die core outlet thickness: 2 mm

3. The polyamide resin composition according to Claim 1, wherein a value obtained by dividing the stress $\sigma(t)$ [Pa] obtained by the stress relaxation measurement method by a parison length L [mm] obtained by the following parison length measurement method satisfies Formula (5) at a time of an elapsed time t=0.1 [s].
[Numerical formula 3]

$$\frac{\sigma(t)}{L} > 13 \qquad \text{Formula (5)}$$

[Parison length measurement method]
A blow molding machine DA-50 (manufactured by Placo Co., Ltd.) was set to the following conditions, and a length of a parison at a time of extruding whole volume of the polyamide resin composition in an accumulator head from the pressure-controlled accumulator head was made a parison length L [mm].
Cylinder temperature: 250°C
Die core diameter: 50 mm
Die core outlet thickness: 2 mm

4. A polyamide resin composition which comprises 40 to 85 parts by mass of a polyamide (A) and 10 to 20 parts by mass of an impact-resistant material (B) in 100 parts by mass of the polyamide resin composition,
wherein an absolute value $|\Delta\log(\sigma(t))/\Delta t|$ [Pa/s] of a stress change rate obtained from a stress $\sigma(t)$ [Pa] obtained by the following stress relaxation measurement method satisfies Formula (1) at a time of an elapsed time t=0.1 [s], and a value obtained by dividing the stress $\sigma(t)$ [Pa] obtained by the following stress relaxation measurement method by a parison length L [mm] obtained by the following parison length measurement method satisfies Formula (5) at a time of an elapsed time t=0.1 [s].
[Numerical formula 4]

$$\left|\frac{\Delta\log(\sigma(t))}{\Delta t}\right| < 2.6 \qquad \text{Formula (1)}$$

$$\frac{\sigma(t)}{L} > 13 \qquad \text{Formula (5)}$$

[Stress relaxation measurement method]
The above-mentioned polyamide resin composition was sandwiched between measurement cells, a strain was loaded while melting the polyamide resin composition under the following conditions, and after stopping it, the stress $\sigma(t)$ [Pa] at the elapsed time t [s] was measured.
Measurement cells: parallel plates ($\Phi$25 mm)
Distance between parallel plates: 1.5 mm
Melting temperature condition: 250°C
Loaded strain: 100%
[Parison length measurement method]
A blow molding machine JB105 (manufactured by The Japan Steel Works, LTD.) was set to the following conditions, and a length of a parison at a time of extruding whole volume of the polyamide resin composition in an accumulator head from the pressure-controlled accumulator head was made a parison length L [mm].
Cylinder temperature: 250°C
Die core diameter: 56 mm
Die core outlet thickness: 2 mm

5. The polyamide resin composition according to any one of Claims 1 to 4, wherein the polyamide resin (A) is a polyamide resin which is at least one kind selected from the group consisting of an aliphatic polyamide (A-1) and an aromatic polyamide (A-2).

6. The polyamide resin composition according to any one of Claims 1 to 5, which further comprises a heat resistant agent (C).

7. The polyamide resin composition according to any one of Claims 1 to 6, wherein the impact-resistant material (B) is at least one kind selected from the group consisting of an (ethylene and/or propylene)/α-olefin-based copolymer, and an (ethylene and/or propylene)/(α,β-unsaturated carboxylic acid and/or unsaturated carboxylic acid ester)-based copolymer.

8. The polyamide resin composition according to Claim 6 or 7, wherein the heat resistant agent (C) is at least one kind selected from the group consisting of a hindered phenol having a t-butyl group at an O-position and a phosphorous acid ester compound of a hindered phenol having a t-butyl group at an O-position.

9. The polyamide resin composition according to any one of Claims 1 to 8, which further comprises an olefin-based ionomer (D).

<table>
<tr><td colspan="2" align="center">**INTERNATIONAL SEARCH REPORT**</td><td>International application No.<br>PCT/JP2018/045270</td></tr>
</table>

| A. CLASSIFICATION OF SUBJECT MATTER |
|---|
| Int.Cl.    C08L77/00(2006.01)i, B29B11/10(2006.01)i, B29C49/00(2006.01)i,<br>            B29C49/04(2006.01)i, C08K5/524(2006.01)i, C08L23/08(2006.01)i,<br>            C08L23/14(2006.01)i, F17C1/16(2006.01)n |
| According to International Patent Classification (IPC) or to both national classification and IPC |

| B. FIELDS SEARCHED |
|---|
| Minimum documentation searched (classification system followed by classification symbols) |
| Int.Cl.    C08L77/00, B29B11/10, B29C49/00, B29C49/04, C08K5/524,<br>            C08L23/08, C08L23/14, F17C1/16 |

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

| Electronic data base consulted during the international search (name of data base and, where practicable, search terms used) |
|---|
| CAplus/REGISTRY(STN) |

| C. DOCUMENTS CONSIDERED TO BE RELEVANT | | |
|---|---|---|
| Category* | Citation of document, with indication, where appropriate, of the relevant passages | Relevant to claim No. |
| X | JP 2007-204674 A (TORAY INDUSTRIES, INC.) 16 August 2007, claims, examples (Family: none) | 1–9 |
| X<br>Y | JP 2017-206639 A (UBE INDUSTRIES, LTD.) 24 November 2017, claims, paragraphs [0055]-[0061], examples (Family: none) | 1–8<br>9 |
| X<br>Y | WO 2017/135215 A1 (UBE INDUSTRIES, LTD.) 10 August 2017, claims, paragraphs [0049]-[0055], examples &<br>EP 3412731 A1, claims, paragraphs [0064]-[0072], examples & CN 108603026 A & KR 10-2018-0104320 A | 1–8<br>9 |

☒ Further documents are listed in the continuation of Box C.      ☐ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>    28 February 2019 (28.02.2019) | Date of mailing of the international search report<br>    12 March 2019 (12.03.2019) |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/045270

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2016/136025 A1 (TORAY INDUSTRIES, INC.) 01 September 2016, claims, paragraph [0036], examples & JP 5935956 B1 & US 2017/0029620 A1, claims, paragraph [0035], examples & EP 3112421 A1 & CN 106255726 A & CA 2953089 A1 & KR 10-2017-0122641 A | 9 |
| E, X | JP 2018-199762 A (TORAY INDUSTRIES, INC.) 20 December 2018, claims, examples (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007204675 A
- JP 2006523763 A